# EUROPEAN PATENT SPECIFICATION

(11) **EP 2 037 146 B1**
(45) Date of publication and mention of the grant of the patent: **21.07.2010**
(21) Application number: 08015777.9
(22) Date of filing: 08.09.2008
(51) Int. Cl.: F16D 55/22

(54) **Pressing and actuating mechanism of disc brake device**
Druck- und Betätigungsmechanismus für eine Scheibenbremsenvorrichtung
Mécanisme de pression et d'actionnement d'un dispositif de frein à disque

(30) Priority: 13.09.2007 JP 2007237368; 19.12.2007 JP 2007326760; 28.07.2008 JP 2008193079
(43) Date of publication of application: 18.03.2009
(73) Proprietor: Akebono Brake Industry Co., Ltd., Tokyo 103-8534 (JP)
(72) Inventor: Murata, Yukio, Tokyo (JP); Iryo, Mikio, Tokyo (JP); Yoshikawa, Kazuhiro, Tokyo (JP); Sindo, Takayuki, Tokyo (JP)
(74) Representative: Grünecker, Kinkeldey, Stockmair & Schwanhäusser Anwaltssozietät

(56) References cited:
- EP-A- 0 139 445
- DE-A1- 2 418 225
- GB-A- 1 046 488
- GB-A- 2 173 874
- US-A- 4 121 697

## Description

### BACKGROUND OF THE INVENTION

### <FIELD OF THE INVENTION>

The present invention relates to a disc brake device according to the preamble of claim 1.

Such disc brake device is known from EP 0 139 445 A1.

### <BACKGROUND ART>

In a disc brake device to be used for vehicles, particularly in a disc brake for railroad vehicles, relative movement between a sprung portion on which a brake is attached and an unsprung portion on which a disc rotor is attached is large. Therefore, a mechanism which can cope with this is required. Generally, a lever-type brake obtained by connection of links which can be easily adapted for large relative movement is known (for example, refer to Patent Document 1).
[Patent Document 1] JP-A-2006-315422

As a conventional example 1, a disc brake device for railroad vehicles disclosed in Patent Document 1 will be described with reference to Figs. 14A to 14D. A disc brake device 401 of the conventional example 1 includes two caliber levers 406 and 406 on which brake heads 407 and 407 to which brake pads in the place where a disc D is sandwiched and pressed are attached are mounted, respectively, and an actuator 414 provided with a movable rod 415 which is driven in at least one of an advance direction or a retreat direction. Further, the disc brake device 401 includes an rotation transmission arm 416 pivotally joined to the movable rod 415, and a telescopic shaft 410 which is engaged with the rotation transmission arm 416. A screw body 413 is pushed outward by a screw mechanism by the push-out rotation of the rotation transmission arm 416 accompanying the advance of the actuator 414. As a result, the caliber levers 406 and 406 rock with a support pin 405 as a center, and the brake heads 407 and 407 sandwiches and presses the disc D, thereby performing braking operation. If a brake pad is worn out, the excessive stroke of the rotation transmission arm 416 causes an end of a cutout portion of a cam plate 419 to contact a gap adjusting rod 421 fixed to a base, and causes the worm gear 417 to rotate. As a result, a gap adjustment gear 418 rotates to perform automatic gap adjustment.

By these constructions, in the disc brake device of the conventional example 1, the advance operation of the movable rod 415 is converted into the extension operation of the telescopic shaft 410 via the rotation transmission arm 416. Moreover, the advance operation of the movable rod 415 increases its power, which is transmitted to the caliber levers 406 and 406. Moreover, the rotation transmission arm 416 which constitutes an increased-power conversion mechanism is provided with a gap adjusting mechanism composed of the cam plate 419, the cutout portion, the worm gear 417, the gap adjustment gear 418, etc. For this reason, the compact construction of the highly-efficient disc brake device 401 which can automatically adjust the gap between the disc D and a brake pad is provided. However, generally, in an air brake, air pressure is typically 700 to 900 KPa or less. Therefore, in order to obtain a large braking force which is suitable for railroad vehicle, it is necessary to increase the cross-sectional area of an air chamber, or to take measures, such as taking a large link ratio of a brake arm portion. For this reason, the brake device itself is still enlarged, and thereby a required space is also expanded. Thus, carriages were not able to be designed compactly.

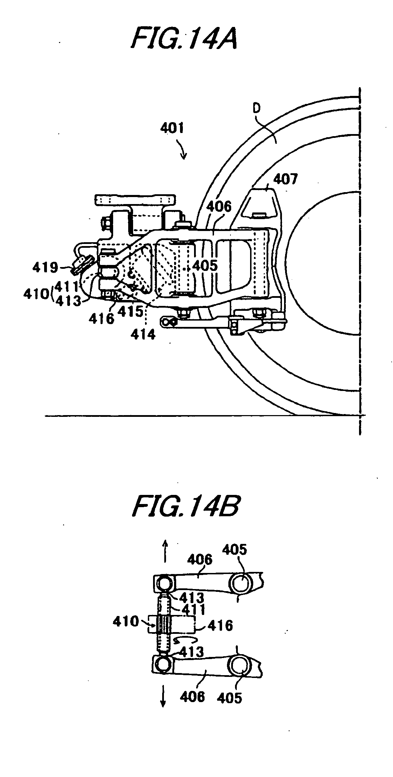

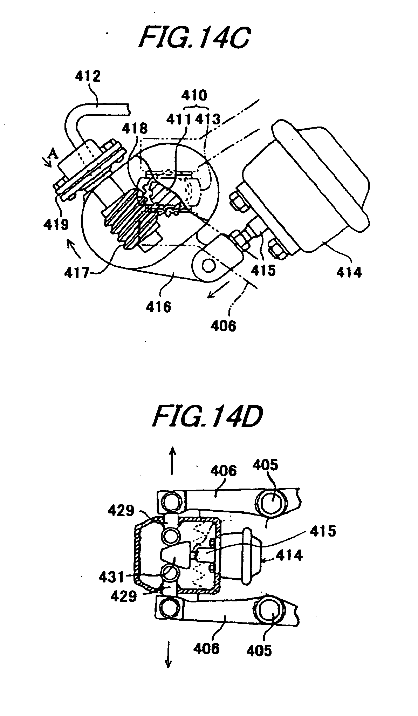

Further, as shown in an embodiment of Fig. 14D, an example in which a so-called wedge mechanism using an inclined cam mechanism of simple structure serving as a boosting mechanism is used is also disclosed in Patent Document 1. However, in the case of the brake for railroad vehicles, a wheel installed in a carriage of a vehicle shows the behavior which the wheel rocks with degrees of freedom in all the directions. Therefore, the brake device, i.e., the brake arm, is frequently displaced following the behavior of the wheel. Therefore, even in the example of Fig. 14D, the caliber levers 406 and 406 which are equivalent to brake arms at the time of braking receive the displacement from the wheel, i.e., the disc D, and are displaced frequently. The displacement generates a prying force which causes a rod member 429 to rock, or is directly transmitted to a wedge 431 constituting the boosting mechanism via the rod member 429. Such a displacement force is one which may have an adverse effect on the wedge 431, the movable rod 415, and the actuator 414. Further, the operating force from the actuator 414 causes a large retreat force in a rocking direction to be generated in the rod member 429 via the wedge 431, and imposes a large burden on a casing which supports the rod member 429 at one point.

Further, in a disc brake for railroad vehicles, a mechanism for coping with the relative movement between a sprung portion on which a brake is attached and an unsprung portion on which a disc rotor is attached, a lever-type brake obtained by connection of links which is known (for example, refer to the following Patent Document 2). In a caliber brake for railroad vehicles, a hydraulic piston, etc. causes the side surface of a disc rotor to press brake pads supported by a caliber, thereby generating a braking force, and the oil pressure of the hydraulic piston is cut off, whereby the brake pads are retreated by the action of a return spring, which results in a non-braking state. However, if a brake pad is worn out by prolonged use, the spacing between the brake pad and the disc rotor may become large. Therefore, an automatic gap adjusting mechanism is provided in this type of caliber brake (for example, refer to the following Patent Document 3, and the aforementioned following Patent Document 2 also includes the automatic gap adjusting mechanism).
[Patent Document 2] JP-T-10-505038
[Patent Document 3] JP-A-2001-124119

As a conventional example 2, a brake caliber unit of the disc brake for railroad vehicles disclosed in Patent Document 2 is shown in Fig. 15. The brake caliber unit of the conventional example 2 includes two caliber levers 101 and 102 which extend substantially parallel to each other and side by side. Brake pads 103 and 104 which can be brought into pressure contact with a disc brake (disc rotor 105) are pivoted on ends of the caliber levers 101 and 102 for tightening the disc brake. The other ends of and central region of both the caliber levers are coupled with each other, and are turnably coupled with the casing 108. A braking force generator and an adjusting device 106 are assembled into a coupling device. At least one of coupling places is formed as eccentric power transmission device 111 which can be operated in a tightening direction by the braking force generator. The other coupling place is formed as a rotary bearing 122. The adjustment of the adjusting device 106 which is assembled into the coupling device along with the braking force generator is extended by the adjustment operation of an operating device 107 rotated by the excessive stroke of the piston rod 118 caused by the brake pads 103 and 104.

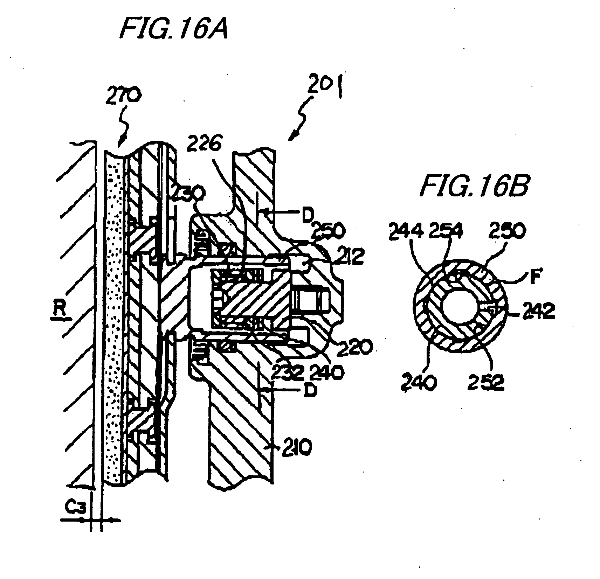

Further, as a conventional example 3, a caliber brake device for railroad vehicles disclosed in Patent Document 3 will be described with reference to Fig. 16A and Fig. 16B. The caliber brake device of the conventional example 3 has a cylinder 212 in which a piston 250 is rockably inserted into a main body 210. The rod 220 fixed within the cylinder 212 supports a stopper 226. A return spring 230 of the piston 250 is disposed at an outer peripheral portion of the stopper 226. As shown in Fig. 16B, an outer peripheral surface 244 of a friction spring 240 provided in series in the return spring 230 is frictionally engaged with an inner peripheral surface 252 of the piston 250. As soon as the stroke of the piston 250 becomes excessive, the friction spring 240 rocks with respect to the piston 250, and automatically adjusts the spacing at the time of non-braking.

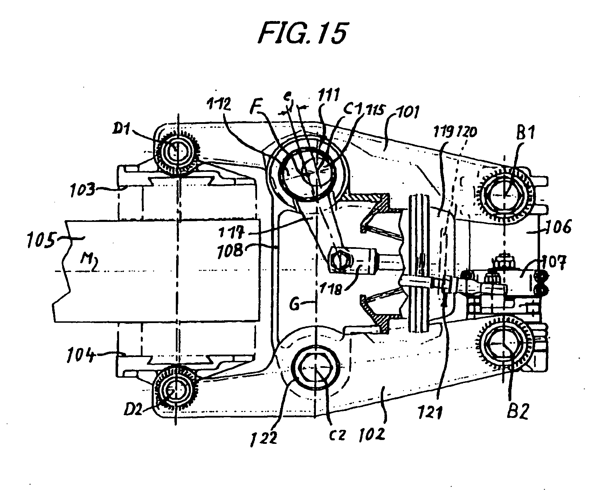

By these constructions, in the brake device of the conventional example 2 disclosed in Fig. 15, by the adoption of an improved brake caliber unit using the eccentric power transmission device 111 which can be operated in the tightening direction by the brake for generator, a structure which is small in required space, is low in weight, and is compact, and a high transmission ratio are allowed, and simple structure is realized. Moreover, at the time of wear of the brake pads 103 and 104, the adjustment of the adjusting device 106 is extended by the adjustment operation of the operating device 107, and the actuation delay at the time of braking is corrected properly. Further, in the brake device of the conventional example 3 disclosed in Fig. 16A and Fig. 16B, even if a brake pad is worn out, the spacing between the brake pad and the disc rotor at the time of non-braking can always be held properly by the compact gap adjusting mechanism in which a space where the friction spring 240 for gap adjustment and the return spring 230 which pulls the piston 250 back to the inside of the cylinder 212 at the time of non-braking are arrayed in series is utilized effectively. Thus, the actuation delay at the time of braking is not caused.

However, even if the brake device of the conventional example 2 is a lever-type caliber brake device, a means for coping with an increase in the rocking angle of the brake arm, accompanying the wear of a brake pad which comes into sliding contact with the disc rotor is no provided at all only by assembling the adjusting device 106 into the coupling device along with the braking force generator. Therefore, although the pad holder is supported so as to be swingable with respect to the brake arm, if the pad holder is rotated by vehicle vibration or the like, the pad contacts the disc rotor, and a drag phenomenon, etc. will occur. Further, the brake device of the conventional example 3 is not related with a lever-type boosting caliber brake device like a brake arm, only by performing the automatic gap adjustment by the piston 250, return spring 230, and the friction spring 240 within a gate-type caliber main body 210. For this reason, troubles of a sliding contact surface between the brake pad and the disc rotor accompanying the increase in the rocking angle of the brake arm generated at the time of wear of the brake pad is not caused.

### SUMMARY OF THE INVENTION

One or more embodiments of the invention provide a brake device provided with a triple roller wedge mechanism which positively holds a retreat force generated in a boosting mechanism via a wedge by a pressing force from an actuator and which does not have an adverse effect on a wedge portion constituting the boosting mechanism even if a brake arm is frequently displaced due to an external factor.

Moreover, at least one example, which does not form part of the invention but which is described herein for a better comprehension of the same, provides a brake device provided with a lever-type brake arm from which a boosting function is obtained with simple structure, and a pad holder with an adjuster function, which always maintains the brake pad and the disc holder at a proper angle, thereby preventing actuation delay at the time of braking or drag at the time of vehicle vibration.

According to one or more embodiments of the invention, a disc brake device is provided with a wedge rod axially moved by an actuator and orthogonally arranged to a wheel axle, a wedge mounted on the wedge rod and having facing inclined surfaces, and a pair of links rocking according the movement of a pair of main rollers rolling on the inclined surfaces. Intermediate portions of the links and base ends of brake arms are coupled via gap adjusting mechanisms. The base ends of the brake arms are boosted, pressed, and expanded according to the movement of the main rollers, and brake pads disposed at rocking ends of the brake arms are pressed and actuated. Apair of sub-rollers rolling on a guide rail are disposed coaxially with the main roller on both sides of the main roller.
In addition, base ends of the pair of links may be journalled to both ends of a strut, and a trapezoidal quadrilateral link may be constituted by the wedge, the main roller, the link, and the strut. Further, both ends of the gap adjusting mechanism may be coupled with the base ends of the link and the brake arm via a spherical bearing.
Further, R stepped portions which regulate the axial movement of the pair of sub-rollers may be formed in the guide rail surfaces.
Further, the inclined surface of the wedge may be formed with at least two different surface angles.
Further, the gap adjusting mechanism may be an automatic gap adjusting mechanism adjusted so as to increase the spacing between the link and the base end of the brake arm by the excessive stroke of the main roller.
Further, a double torsion spring which restores the trapezoidal quadrilateral link to its original shape may be disposed in a journaling portion between the base ends of the pair of links, and both ends of the strut.

According to one or more embodiments of the invention, in a disc brake device including a wedge rod axially moved by an actuator and arranged orthogonally to a wheel axle, a wedge mounted on the rod and having facing inclined surfaces, and a pair of links rocking according the movement of a pair of main rollers rolling on the inclined surfaces, and coupling intermediate portions of the links and base ends of the brake arms together via gap adjusting mechanisms, boosting, pressing, and expanding the base ends of the brake arms according to the movement of the main rollers, and pressing and actuating brake pads disposed at rocking ends of the brake arms, a pair of sub-rollers rolling on the a guide rail coaxially on both sides of the main roller. Thereby, a brake mechanism can be made compact by a double boosting mechanism of a cam mechanism composed of a wedge and a lever mechanism composed of links. Moreover, a retreat force generated in the boosting mechanism via the wedge by the pressing force from an actuator can be positively transferred and dispersed onto the guide rail via the pair of sub-rollers disposed coaxially on both sides of the main roller. Furthermore, individual parts themselves which constitute the boosting mechanism can bear a load without receiving an adverse effect, such as deformation, the rocking resistance of the boosting mechanism can also be made small, and the bootsting efficiency can be improved. Moreover, slipping is little, and rolling resistance occupies most, by a rotational difference which the main rollers are pressed wide by the wedge and the sub-rollers roll on the guide rails in the direction opposite to the rotating direction. Thus, a boosting mechanism with little sliding resistance can be realized.

Further, in a case where base ends of the pair of links are journalled to both ends of a strut, and a trapezoidal quadrilateral link is constituted by the wedge, the main roller, the link, and the strut, even if the brake arms are frequently displaced due to an external factor, such as striking impact, this displacement is absorbed as the links journalled to the struts rocks along with the strut, and the force caused by an external factor is kept from being exerted on the wedge and the main roller. Thus, an adverse effect on the wedge constituting the boosting mechanism is prevented. Moreover, in a case where both ends of the gap adjusting mechanism are coupled with the base ends of the link and the brake arm via a spherical bearing, the displacement in all directions between the brake arm and the link can be absorbed and properly handled via the gap adjusting mechanism.

Moreover, in a case where R stepped portions which regulates the axial movement of the sub-rollers are formed in the guide rail surfaces on which the pair of sub-rollers roll, not only falling off of a sub-roller itself can be prevented, but a serpentine motion of the sub-roller when the link constituting the boosting mechanism rocks can be effectively prevented, and smooth link rocking is promoted. Thereby, the boosting efficiency in the boosting mechanism is not degraded. Moreover, a partial load to the main roller can be prevented. Further, in a case where the inclined surface of the wedge is formed with at least two different surface angles, a pad clearance at the initial stage of braking can be rapidly filled by a small wedge stroke, and a high boosting ratio can also be obtained so that a positive braking force may be obtained by a wedging action at the latter half of the braking. Thus, it is possible to realize a brake mechanism capable of obtaining good response and positive boosting.

Moreover, in a case where the gap adjusting mechanism is an automatic gap adjustingmechanism adjusted so as to increase the spacing between the link and the base end of the brake arm by the excessive stroke of the main roller, the main roller generates an excessive stroke by the wear of a brake pad, and the spacing between the link and the base end of the brake arm is automatically adjusted properly. Thus, even if the brake pad is worn out, the excessive stroke of the wedge and the excessive rocking of the brake arm are automatically suppressed and adjusted. In a case where a double torsion spring which restores the trapezoidal quadrilateral link to its original shape is disposed in a journaling portion between the base ends of the pair of links, and both ends of the strut, even if each brake arm is frequently displaced horizontally asymmetrically due to an external factor, such as striking impact, the trapezoidal quadrilateral link can be easily restored to its original shape. As a result, right and left pad clearances can be generated properly (equally).

Further, according to at least one example, which does not form part of the invention but which is described herein for a better comprehension of the same, in a disc brake device in which upper ends of a pair of brake arms are expanded and pressed, and brake pads mounted on pad holders pivoted on lower ends of the brake arms are pressed and actuated, adjuster correcting mechanisms which maintain the brake pads and a disc rotor in parallel irrespective of the posture of the brake arms when the brake pads mounted on the pad holders are worn out and an excessive stroke is generated are provided between the brake arms and the pad holders.
In addition, the adjuster correcting mechanism may be disposed inside the brake arm in an upper portion of a journaling portion of the pad holder.
Further, the adjuster correcting mechanism may be disposed inside the pad holder in an upper portion of a journaling portion of the pad holder.
Further, the adjuster correcting mechanism may be composed of a friction rod supported by one of the brake arm and the pad holder, and a friction spring supported by the other of the brake arm and the pad holder, and the brake pad and the disc rotor may be maintained in parallel by the relative movement between the friction rod, and the friction spring brought into pressure contact with and fitted to the friction rod.
Further, the adjuster correcting mechanism may be composed of a link member which connects an upper portion of a housing body and an upper portion of the pad holder, or a link member which connect a lower portion of the housing body and a lower portion of the pad holder.
Further, a spring member may be formed in the link member.
Further, the adjuster correcting mechanism may be disposed inside the pad holder of a journaling portion of the pad holder.
Further, the adjuster correcting mechanismmay be disposed inside the brake arm of a journaling portion of the pad holder.
Further, the adjuster correcting mechanism may be composed of a spring and a centering guide which are disposed within the journaling portion of the pad holder, and if the brake pad is worn out and the angle of rotation beyond a predetermined value may be generated in the pad holder, the centering guide rotates by the force over an elastic deformation of the spring, and the angle of the pad holder relative to the brake arm is displaced, thereby making an adjustment such that the brake pad and the disc rotor are maintained in parallel.

According to the at least one example, which does not form part of the invention but which is described herein for a better comprehension of the same , in a disc brake device in which upper ends of a pair of brake arms are expanded and pressed, and brake pads mounted on pad holders pivoted on lower ends of the brake arms are pressed and actuated, adjuster correcting mechanisms which maintain the brake pads and a disc rotor in parallel irrespective of the posture of the brake arms when the brake pads mounted on the pad holders are worn out and an excessive stroke is generated are provided between the brake arms and the pad holders. Thereby, even if the brake pad is worn out and the brake arm rocks excessively, and thereby, the spacing with respect to the disc rotor cannot be maintained in parallel, the pad holder and the disc rotor are corrected in parallel properly by the adjuster correcting mechanism. Thus, the partial wear and drag of the brake pad are prevented.

Further, in a case where the adjuster correcting mechanism is disposed inside the brake arm in an upper portion of a journaling portion of the pad holder, a slightly complicated adjuster correcting mechanism is disposed at the brake arm with relatively thickness. Thus, only a support pin, etc. may be disposed at the pad holder. As a result, the pad holder can be made simple and light. Moreover, in a case where the adjuster correcting mechanism is disposed inside the pad holder in an upper portion of a journaling portion of the pad holder, some of the adjuster correcting mechanism, such as a return spring, is distributed at the brake arm. Thus, the adjuster correcting mechanism can be constructed in a well-balanced manner with respect to the pad holder. Thus, portions on the side of the brake arm are also simplified. In addition, since the adjuster correcting mechanism is disposed inside the brake arm or the pad holder, it is hardly influenced by a scattering stone or heavy snow.

Furthermore, in a case where the adjuster correcting mechanism is composed of a friction rod supported by one of the brake arm and the pad holder, and a friction spring supported by the other of the brake arm and the pad holder, and the brake pad and the disc rotor are maintained in parallel by the relative movement between the friction rod, and the friction spring brought into pressure contact with and fitted to the friction rod, any vibration of the pad holder at the time of vehicle vibration can also be effectively suppressed as well as the adjuster correcting mechanism can be constructed between the friction rod of structure and the friction spring of simple structure. Further, in a case where the adjuster correcting mechanism is composed of a link member which connects an upper portion of a housing body and an upper portion of the pad holder, or a link member which connect a lower portion of the housing body and a lower portion of the pad holder, by the adoption of a simpler link member, the pad holder also properly follows the movement of the brake arm which rocks excessively at the time of wear of the brake pad, so that the pad holder can be maintained parallel to the disc rotor. Further, in a case where a spring portion is formed in the link member, the pad holder can follow the movement of the brake arm so that a lining may be uniformly worn out with respect to the wear of the lining. Thus, as well as partial wear can be prevented, the torsion of the pad holder can be absorbed by a spring portion against the axial torsional vibration of the disc rotor which comes into sliding contact with the pad. As a result, drag and partial wear can be prevented.

Moreover, in a case where the adjuster correcting mechanism is disposed inside the brake holder of a journaling portion of the pad holder, the adjuster correcting mechanism can be disposed in the journaling portion of the pad holder. Thus, since the friction rod or the like is not exposed to the outside, a structure which is hardly influenced by a scattering stone or heavy snow, is good-looking, and is simpler is obtained. In addition, it is not necessary to dispose any parts of the adjuster correcting mechanism on the side of the brake arm. Thus, the structure on the side the brake arm becomes simple. Furthermore, in a case where the adjuster correcting mechanism is disposed inside the brake arm of a journaling portion of the pad holder, similarly to above, the friction rod or the like is not exposed to the outside. Thus, a structure which is hardly influenced by a scattering stone or heavy snow, is good-looking, and is simpler is obtained. In addition, simplification on the side of the pad holder can be achieved by disposing a slightly complicated adjuster correcting mechanism on the side of the brake arm with a comparative margin in arrangement design of parts.

Further, in a case where the adjuster correcting mechanism is composed of a spring and a centering guide which are disposed within the journaling portion of the pad holder, and if the brake pad is worn out and the angle of rotation beyond a predetermined value is generated in the pad holder, the centering guide rotates by the force over the elastic deformation of the spring, and the angle of the pad holder relative to the brake arm is displaced, thereby making an adjustment such that the brake pad and the disc rotor are maintained in parallel, according to the angle of relative rotation of the brake arm and the pad holder, the centering guide rotates by the force over the elastic deformation of the spring, and thereby adjuster correction is made. Thus, since adjustment correction is made by the operation in a rotational direction in the journaling portion which is a central portion of the operation of the pad holder, the operation at the time of adjuster correction becomes smooth.

Other aspects and advantages of the invention will be apparent from the following description, the drawings and the claims.

### BRIEF DESCRIPTION OF THE DRAWINGS

Fig. 1A and Fig. 1B are views showing a brake device of a first embodiment of the invention, Fig. 1A is a plan sectional view of major portions, and Fig. 1B is a B-B sectional view of Fig. 1.
Fig. 2 is a side view of the whole brake device of the first embodiment.
Fig. 3 is a plan view of major portions showing the relation between a boosting mechanism composed of a triple roller wedge mechanism and a trapezoidal quadrilateral link mechanism, and a brake arm.
Fig. 4A is a C-C sectional view of Fig. 3, and Fig. 4B is a perspective view of the boosting mechanism composed of the triple roller wedge mechanism and the trapezoidal quadrilateral link mechanism.
Fig. 5 is an exploded perspective view of the triple roller wedge mechanism and the trapezoidal quadrilateral link mechanism.
Fig. 6 is an exploded perspective view of a guide rail and a link assembly.
Fig. 7A is a perspective view of a link, and Fig. 7B is a perspective view of an adjuster lever.
Fig. 8A is plan sectional view in a striking state where an impact from a brake pad is applied at the beginning of braking of a new brake pad, and Fig. 8B is a plan sectional view in a striking state where an impact from the brake pad is applied at the time of full braking at the time of wear of the brake pad.
Fig. 9A and Fig. 9B shows a first example of a brake device, which does not form part of the invention but which is described herein for a better comprehension of the same, Fig. 9A is a plan sectional view of the whole brake device, and Fig. 9B is a sectional view of major portions.
Fig. 10A to Fig. 10C shows a second example of a brake device, which does not form part of the invention but which is described herein for a better comprehension of the same, Fig. 10A is a plan sectional view of the whole brake device
Fig. 10B and Fig. 10C are sectional views of major portions.
Fig. 11A and Fig. 11B shows a third example of a brake device, which does not form part of the invention but which is described herein for a better comprehension of the same, Fig. 11A is a plan sectional view of the whole brake device in which a link member is disposed, and Fig. 11B shows the operation of major portions.
Fig. 12A to Fig. 12D are explanatory views showing a fourth example of a brake device, which does not form part of the invention but which is described herein for a better comprehension of the same, including a pad holder with an adjuster function having a link member in which a spring portion is formed.
Fig. 13A to Fig. 13D are explanatory views showing a fifth example of a brake device, which does not form part of the invention but which is described herein for a better comprehension of the same, including a pad holder with an adjuster function, and showing sections of major portions in which an adjuster correction mechanism is disposed within a journaling portion of the pad holder.
Fig. 14 is an explanatory view of a disc brake device for railroad vehicles showing a conventional example 1.
Fig. 15 is an explanatory view of a brake caliber unit showing a conventional example 2.
Fig. 16A and Fig. 16B are explanatory views of a caliber brake device showing a conventional example 3.

### [Reference Numerals]

- 1:: SUPPORT
- 2:: CALIBER BODY
- 3:: BRAKE ARM
- 4:: AIR CHAMBER
- 5:: WEDGE
- 6:: MAIN ROLLER
- 7:: GUIDE IDLER (SUB-ROLLER)
- 8:: COLLAR
- 9:: ROLLER SHAFT BOLT
- 10:: NUT
- 12:: LINK
- 14:: ADJUSTER (GAP ADJUSTING MECHANISM)
- 16:: RETURN SPRING
- 20:: WEDGE ROD
- 24:: BRAKE PAD
- 301:: PAD HOLDER
- 302:: BRAKE ARM
- 302A:: UPPER END
- 302C:: RECEIVING HOLE
- 303:: HOUSING BODY
- 304:: ARM SHAFT
- 305:: PAD SHAFT
- 306:: FRICTION ROD
- 308:: BRAKE PAD
- 310:: ADJUSTER CORRECTING MECHANISM
- 312:: PIN
- 313:: FRICTION SPRING
- 314:: O-RING FIXING COLLAR
- 315:: FRICTION SPRING COVER
- 316:: RETURN SPRING
- 317:: WASHER
- 318:: C-SHAPED STOP RING
- 319:: O-RING
- 322:: ROD MEMBER
- R:: DISC ROTOR

### DETAILED DESCRIPTION OF THE EXEMPLARY EMBODIMENTS

### <First Embodiment>

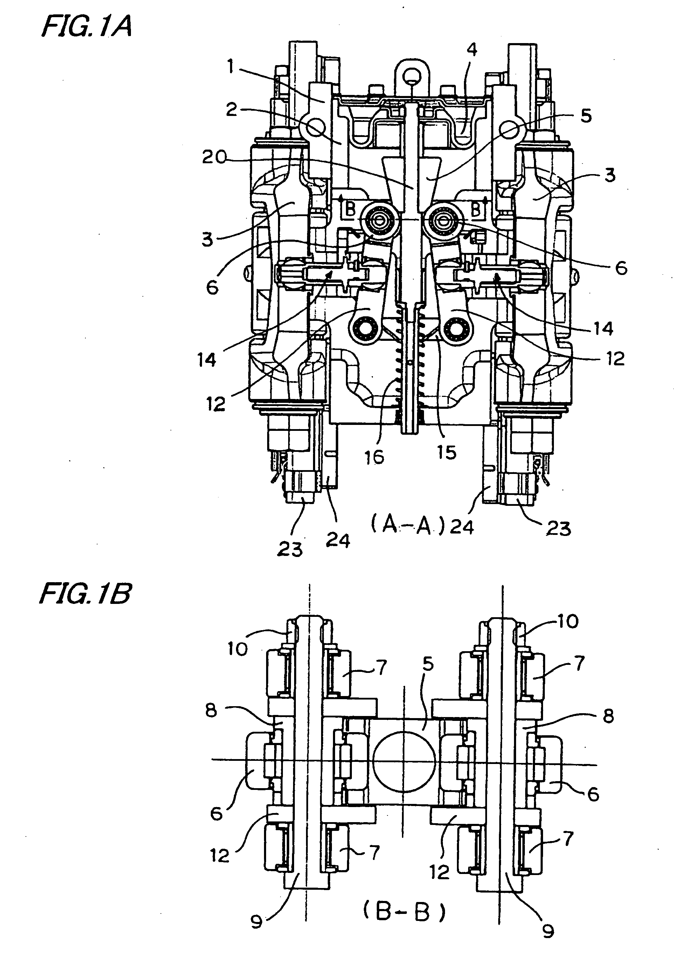

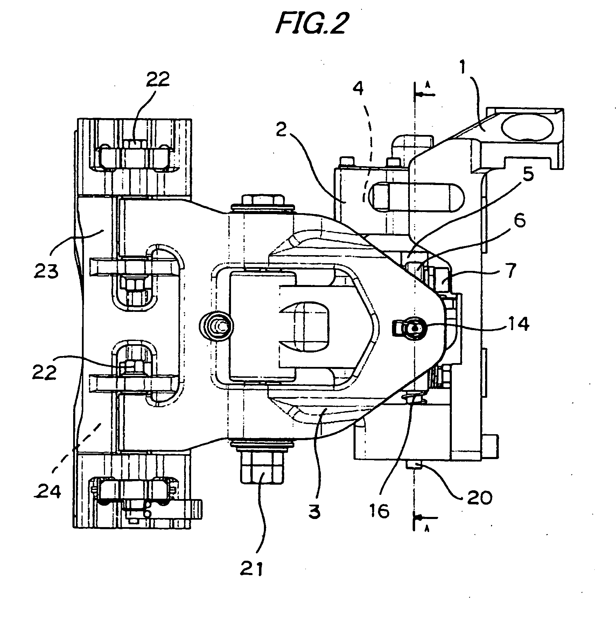

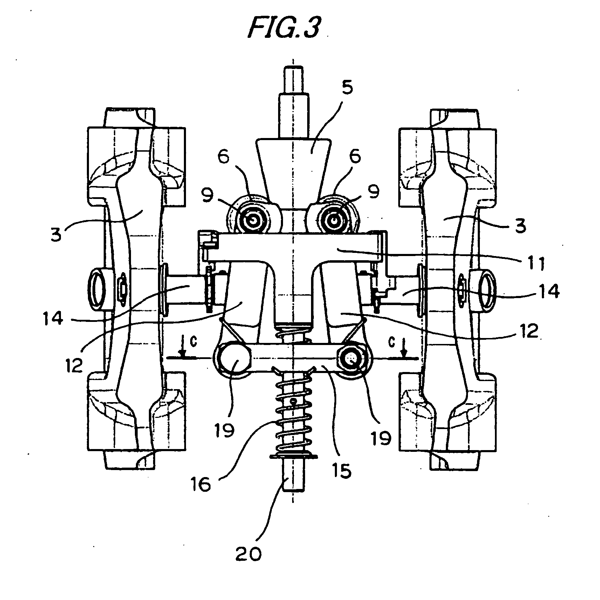

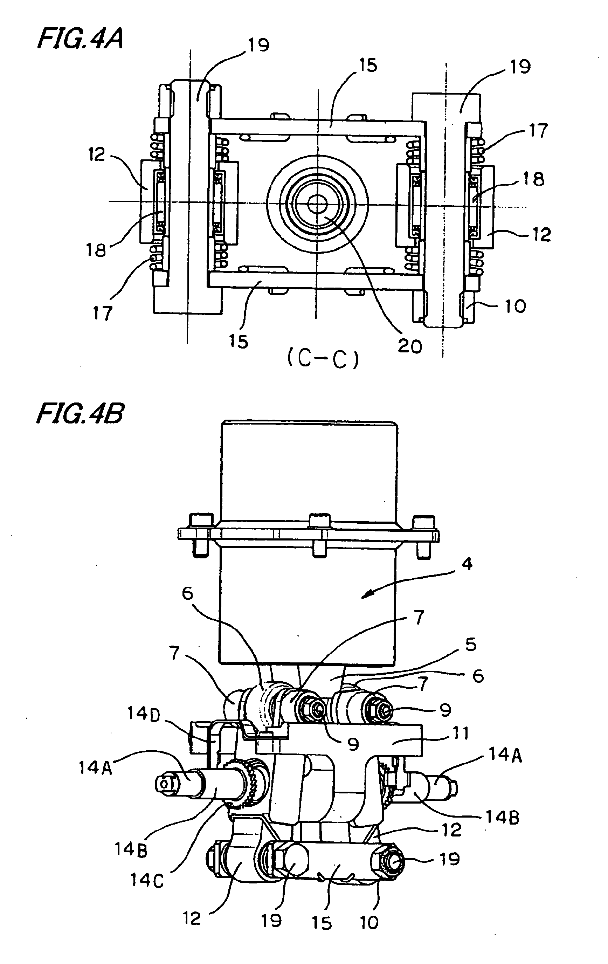

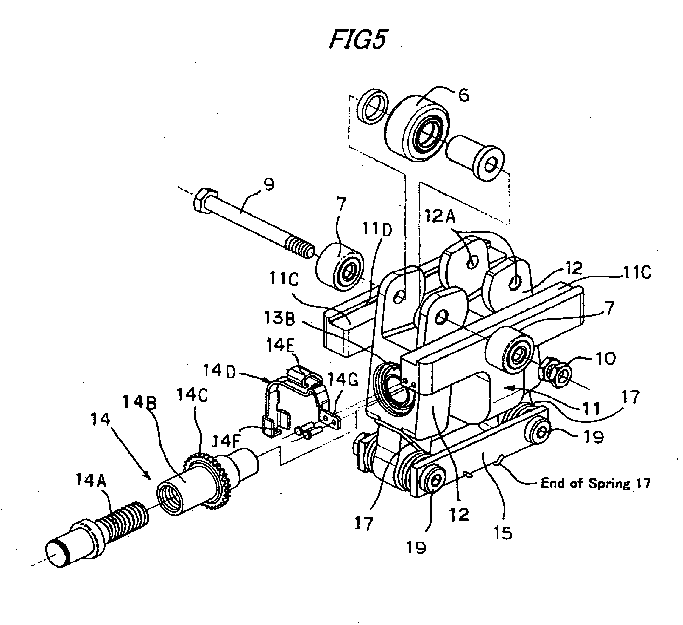

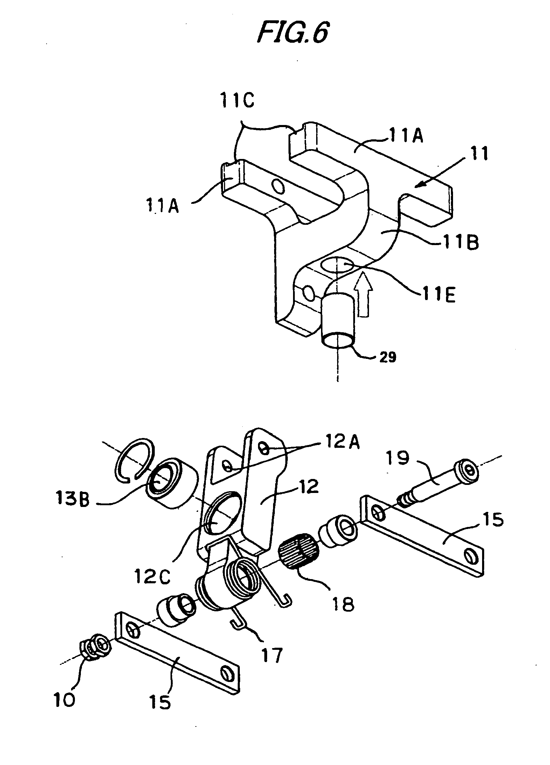

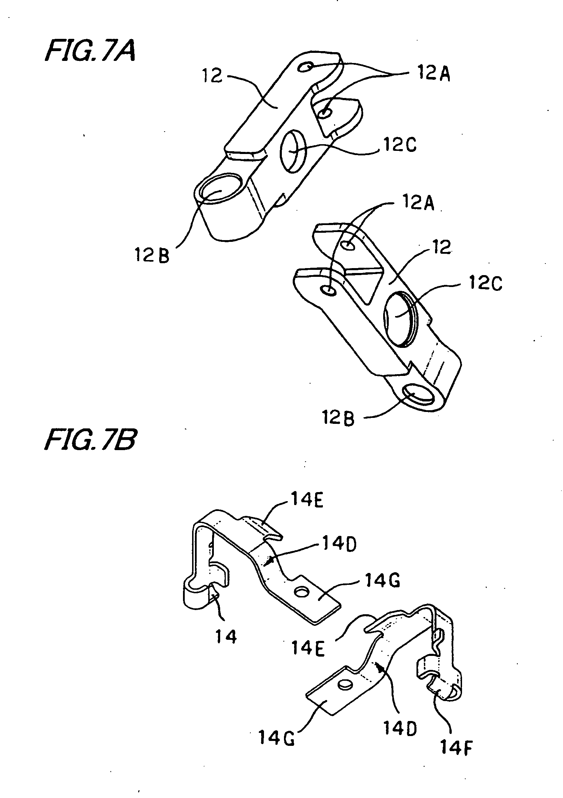

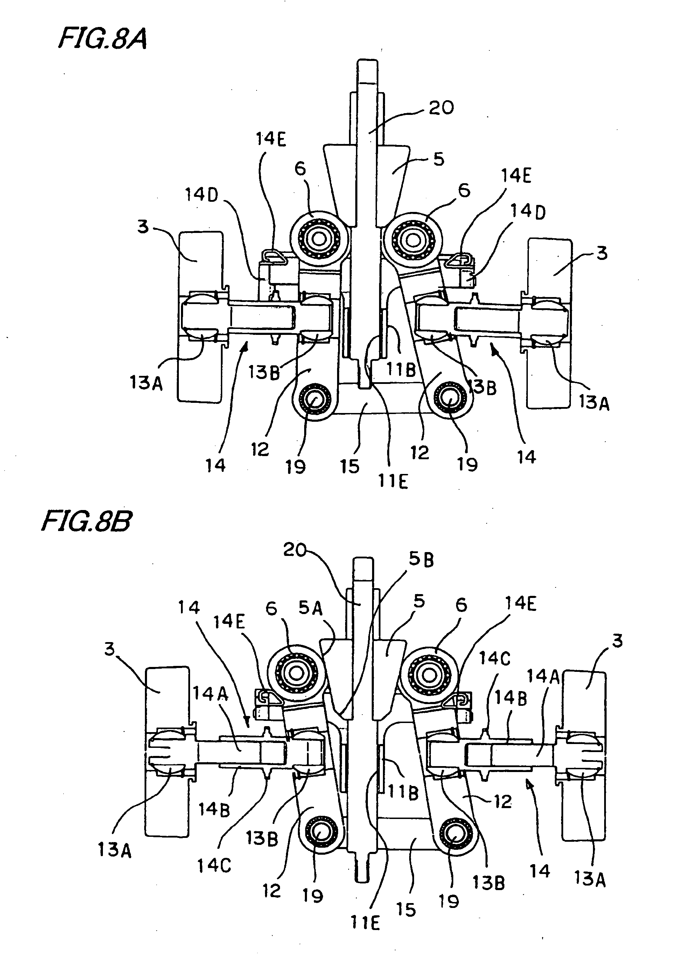

Fig. 1A and Fig. 1B are views showing a triple roller wedge mechanism in a disc brake device of a first embodiment of the invention, Fig. 1A is a plan sectional view of major portions, and Fig. 1B is a B-B sectional view of Fig. 1. Fig. 2 is a side view of the whole brake device of the first embodiment. Fig. 3 is a plan view of major portions showing the relation between a boosting mechanism composed of the triple roller wedge mechanism and a trapezoidal quadrilateral link mechanism, and brake arms. Fig. 4A is a C-C sectional view of Fig. 3, and Fig. 4B is a perspective view of the boosting mechanism composed of the triple roller wedge mechanism and the trapezoidal quadrilateral linkmechanism. Fig. 5 is an exploded perspective view of the triple roller wedge mechanism and the trapezoidal quadrilateral linkmechanism. Fig. 6 is an exploded perspective view of a guide rail and a link assembly. Fig. 7A is a perspective view of a link, and Fig. 7B is a perspective view of an adjuster lever. Fig. 8A is plan sectional view in a striking state where an impact from a brake pad is applied at the beginning of braking of a new brake pad, and Fig. 8B is a plan sectional view in a striking state where an impact from the brake pad is applied at the time of full braking at the time of wear of the brake pad.

The triple roller wedge mechanism of the disc brake device of the first embodiment of the invention, as shown in Fig. 1, basically includes a wedge rod 20 which is axially moved by an air chamber 4 as an actuator, and is arranged orthogonally to a wheel axle, a wedge 5 which is mounted on the rod 20, and has facing inclined surfaces, and a pair of links 12 and 12 which rocks according to the movement of a pair of main rollers 6 and 6 which roll on these inclined surfaces. Intermediate portions of the links 12 and 12 and base ends of brake arms 3 and 3 are coupled together via gap adjusting mechanisms 14 and 14. The base ends of brake arms 3 and 3 are boosted, pressed, and expanded according to the movement of the main rollers 6 and 6, and brake pads 24 and 24 disposed at rocking ends of the brake arms 3 and 3 are pressed and actuated. A pair of sub-rollers 7 and 7 which roll on the guide rails 11 are disposed coaxially with the main roller 6 on both sides of the main roller 6.

A brake device body of the first embodiment, as shown in Fig. 2, includes an attachment support 1 of an upper portion (in Fig. 2, the right side is the upper portion) attached to a carrier or the like, and a caliber body 2 of a lower portion fixed to the support 1 with bolts, etc. The air chamber 4 for braking is accommodated in the caliber body 2. The triple roller composed of the main roller 6 and the sub-rollers 7 and 7 journalled to both sides of the main roller is pushed wide via a tapered cam-shaped wedge 5 by the axial movement (vertical direction of Fig. 2) of the air chamber 4. Thereby, as shown in Fig. 1A, the pair of links 12 and 12 which have the triple roller journalled to upper ends thereof, and have lower ends journalled to both ends of struts 15 rock outward, whereby the base end of the brake arm 3 is moved outward via each of the pair of adjusters 14 which are the gap adjusting mechanism. Thereby, as shown in Fig. 2, the brake arm 3 rock with a rocking shaft 21 at the intermediate portion as an axial center. As a result, the pad holder 23 journalled to a rocking end of the brake arm 3 swingably by the holder shaft 22 actuates, and the brake pad mounted on the pad holder 23 is pressed against the side surface (toward the back of the sheet of Fig. 2) of a disc rotor (not shown).

As shown in Fig. 1A which is a plan sectional view of major portions of the triple roller wedge mechanism, the air chamber 4 accommodated in the caliber body 2 preferably has fluid pressure (either positive pressure or negative pressure is available), such as air pressure, as a power source. The brake chamber 4 is biased in a brake release direction by the restoring force of a coil spring or the like disposed therein. Braking operation is performed by compressing the coil spring by positive pressure disposed opposite across a diagram or by compressing the coil spring by introducing negative pressure toward the coil spring. With the advancement (downward of Fig. 1A) of the wedge rod 20 connected to the air chamber 4 against the restoring force of the return spring 16 at the time of braking, the tapered cam-shaped wedge 5 fixed to the wedge rod 20 presses and expands the pair of main rollers 6 and 6 outward by its inclined surfaces. As clearly shown in Fig. 8B to be mentioned later, the inclined surfaces of the wedge 5 are formed with at least two different surface angles (steep inclined surface 5B having a large angle at its distal side and a gentle inclined surface 5A having a small angle at its proximal side). By such a construction, a pad clearance at the initial stage of braking can be rapidly filled by a small wedge stroke, and a positive braking force can be obtained by a wedging action at the latter half of the braking. Thus, it is possible to realize a brake mechanism capable of obtaining good response and positive boosting.

As shown in Fig. 1B, the sub-rollers 7 and 7 which are guide idlers are respectively journalled to axial opposite sides of roller shaft bolts 9 to which the pair of main rollers 6 are journalled. The sub-rollers 7 and 7 are disposed outside two-pronged upper ends (refer to Fig. 5) of the link 12. Accordingly, the main roller is disposed inside the two-pronged upper end of the link 12. Reference numeral 10 represents a nut which fastens the end of the roller shaft bolt 9 to which the main roller 6 and the sub-rollers 7 and 7 are journalled. Further, as can be understood in Fig. 1B, the wedge 5 is located within the two-pronged upper ends of the links 12. Therefore, the wedge 5 is regulated by the two-pronged internal surfaces of the links 12 even if the wedge receives a force in the rotational direction to the main roller 6. Thus, the wedge 5 is prevented from coming out of sliding contact with the main roller 6.

Fig. 3 is a plan view of major portions showing the relation between a boosting mechanism composed of the triple roller wedge mechanism and a trapezoidal quadrilateral link mechanism, and a brake arm. The invention also has a boosting mechanism by the leverage by rocking of the link 12 in the trapezoidal quadrilateral link mechanism, in addition to the boosting mechanism by the wedging action between of the wedge 5 having tapered cam-shaped inclined surfaces, and the main roller 6. By a combination of these two boosting mechanisms, a large braking force can be obtained even by a compact space-saving brake device. That is, in addition to the boosting action by the wedging action between the wedge 5 and the main roller 6, during the rocking of the link 12 about a bearing axial bolt 19, the output to the brake arm 3 from the adjuster 14 journalled to the intermediate portion of the link 12 is accompanied by a boosting action by the leverage. On the other hand, the base ends of the pair of links 12 and 12 are journalled to the struts 15. When the links are displaced by the impact from a wheel, i.e., a disc rotor due to an external factor through the brake arms 3 and 3, the links 12 are displaced at the struts 15 with the main rollers 6 as centers (refer to Fig. 8). Thereby, even if the brake arms 3 are frequently displaced due to an external factor, such as striking impact, this displacement is absorbed as the links 12 journalled to the struts 15 rocks, and the force caused by an external factor is kept from being exerted on the wedge 5 and the main roller 6. Thus, an adverse effect on the wedge constituting the boosting mechanism is prevented.

Fig. 4A is a C-C sectional view of Fig. 3, and Fig. 4B is a perspective view of the boosting mechanism composed of the triple roller wedge mechanism and the trapezoidal quadrilateral link mechanism. From these drawings, the relation construction between the struts 15 and the links 12 will be understood well. Fig. 4A is a C-C sectional view of Fig. 3, i.e., a sectional view in the bearing shaft bolts 19 of the links 12 and 12 journalled to both ends of the struts 15. From this drawing, it will be understood that a pair of struts 15 and 15 are in a free state from the wedge rod 20. Double torsion springs 17 and 17 are fitted and inserted into between the base ends of the links 12, and the struts 15, in the bearing axial bolts 19 which have the base ends of the links 12 journalled to their intermediate portions, and have the struts 15 and 15 journalled to their both ends. As shown in Fig. 4B, one end of the double torsion ring 17 is locked to the link 12, and the other end thereof is locked to the strut 15 (in the illustrated example, an intermediate portion of one spring is locked to the link 12, and both ends thereof are locked to the pair of struts 15, respectively. However, two springs may be provided in each of the bearing axial bolts 19. Thereby, as mentioned above, after the brake arm 3 is frequently displaced due to an external factor, such as striking impact, and the link 12 journalled to the strut 15 has rocked, the trapezoidal quadrilateral link mechanism can be rapidly recovered to its original position (shape) rapidly by the double torsion spring 17.

Fig. 5 is an exploded perspective view of the triple roller wedgemechanism and the trapezoidal quadrilateral linkmechanism. The base ends of the pair of links 12 and 12 are journalled to both ends of the pair of struts 15 and 15 in a floating state via the double torsion springs 17 and 17 by the bearing axial bolts 19. As mentioned above, the main roller 6 and the sub-rollers 7 and 7 are arranged so as to be journalled by the roller shaft bolt 9 inside and outside the two-pronged upper ends of each link 12. The construction of a link 12 is clearly shown in Fig. 7A. Upper bolt holes 12A through which the roller shaft bolt 9 is to be inserted are formed at two-pronged upper ends of the link, a spherical shaft hole 12C within which an inner spherical bearing 13B is accommodated is formed at an intermediate portion of the link, and a lower bolt hole 12B through which the bearing shaft bolt 19 is to be inserted is formed at a lower end of the link. Each of the sub-rollers 7, 7, 7, and 7 are constructed so as to roll on the rolling surface 11C arranged to face the upper surface in the guide rail 11. An R stepped portion 11D which regulates the movement of the sub-roller 7 in the axial direction (outward in the illustrated example) is formed in the rolling surface 11C. The R stepped portion 11D not only can prevent falling off of the sub-roller 7 itself, but can effectively regulate a serpentine motion of the sub-roller 7 when the link 12 constituting the boosting mechanism rocks, and promote smooth link rocking. Thereby, the boosting efficiency in the boosting mechanism is not degraded. Moreover, slipping is little, and rolling resistance occupies most, by a rotational difference which the main rollers 6 are pressed wide by the wedge 5 and the sub-rollers 7 roll on the rolling surfaces 11C of the guide rails 11 in the direction opposite to the rotating direction. Thus, a boosting mechanism with little sliding resistance can be realized.

Further, the construction of the adjuster 14 interposed between the brake arms 3 in the intermediate portion of the link 12 is clearly shown in Fig. 5. The adjuster 14 composed of an adjuster nut 14B having ratchet gear teeth 14C installed at its intermediate outer peripheral portion, and an adjuster screw 14A in which a male thread portion threadedly screwed to a female thread engraved inside a tubular portion of the adjuster nut 14B is engraved is mounted on the intermediate portion of the link 12 accommodating the inner spherical bearing 13B. Reference numeral 14D represents an adjuster lever. One fixed base end 14G of the lever is screwed to the end surface of one guide rail 11, a tapered portion 14E on which the main roller 6 abuts at the time of an excessive stroke is formed at an upper portion of the lever, and a claw 14F which causes the ratchet gear teeth 14C in the adjuster nut 14B to rotate only in one direction is formed at the other lower end of the lever. The adjuster lever 14D is made of a spring material with a restoring force. Fig. 7B is a perspective view when only the adjuster lever 14D is taken out.

Fig. 6 is an exploded perspective view of a guide rail and a link assembly. Here, the journalled state of the link 12 and the struts 15 via the double torsion spring 17 will be understood well. Preferably, journaling via a needle bearing 18 is made. Further, here, a connecting and supporting portion 11B which connects a pair of facing rail portions 11A in the guide rail 11 is clearly shown, and it will be clearly understood that a wedge rod 20 is inserted through a shaft hole 11E bored in a central portion of the connecting and supporting portion 11B via a bush 29, etc. (Illustration of the wedge rod 20 is omitted in Fig. 6). This can make the perpendicularity of the rolling surface 11C in the guide rail 11, and the wedge rod 20 easy to appear in machining.

Fig. 8 illustrates a state before and after the adjustment of the automatic gap adjusting mechanism (adjuster) 14, Fig. 8A is plan sectional view in a striking state where an impact from a brake pad is applied at the beginning of braking of a new brake pad, and Fig. 8B is a plan sectional view in a striking state where an impact from the brake pad is applied at the time of full braking at the time of wear of the brake pad. When a brake pad (reference numeral 24 of Fig. 1A) is worn out, as shown in Fig. 8B, the rocking of the brake arm 3 becomes large, and the rocking of the link 12 via the automatic gap adjusting mechanism 14 also becomes large. Accordingly, the stroke of the wedge rod 20 in which the wedge 5 is provided also becomes largely excessive. Thereby, the outward movement of the main roller 6 also becomes large, and the tapered portion 14E in the adjuster lever 14D is depressed toward the adjuster nut 14B. To make a description in an exploded perspective view of Fig. 5, when the adjuster lever 14D returns to its original position by its own restoring force by the release of the braking operation that the adjuster lever 14D deflects with one fixed base end 14G as a center, and the claw 14F at the other end comes into sliding contact the ratchet teeth 14C in the adjuster nut 14B (is not made to rotate), and moves sufficiently downward, the claw 14F meshes with the ratchet gear teeth 14C to make the adjuster nut 14B rotate only in one direction. Thereby, the axial distance from the adjuster screw 14A screwed into the adjuster nut 14B increases, so that automatic gap adjustment can be made, and excessive rocking of the brake arm 3 caused by the wear of the brake pad can be suppressed.

The embodiments of the invention have been described hitherto. However, proper selections can be made without departing from the scope of the invention about the kind of the air chamber, and in the case of an air chamber, the shape or type (a diaphragm type, a piston type, or the like) of the air chamber (both a positive pressure type and a negative pressure type can be adopted), the connection formbetween the air chamber and the wedge rod, a mounting form of the air chamber and the wedge rod, the formation form of the inclined surfaces in the wedge (selection of an angle of at least two different face angles; although the inclined surfaces are formed only at two surfaces contacting the main rollers, for example, the main rollers can be constructed so that wobbling may be suppressed, for example, by using a conical body as the wedge, and by adopting a section having a concave conical groove adapted to a wedge conical surface), the shape and type of the links, the shape and type of the struts, the journaling form of the links to the struts, the shape, type, and the arrangement form of the double torsion spring which performs the return of the links in the struts to their original positions, the journaling form of the main rollers and the sub-rollers in the links, the interposition form of the gap adjusting mechanisms to the base ends of the links and brake arms (proper universal joints may be used other than interposition via a spherical bearing), the shape and type of the gap adjusting mechanisms (a turnbuckle-like gap adjusting mechanismisalso adopted properly other than screwing between an adjuster nut and an adjuster screw. Further, although an automatic gap adjusting mechanism adjusted so as to increase the spacing between the links and the base ends of the brake arms by the excessive stroke of the main rollers is preferable, the manual gap adjusting mechanism is also within the scope of the invention), the shape and type of the automatic gap adjustingmechanism (this mechanism can be constructed such that an adjuster lever rocks by the sub-rollers.), the shape and type of the guide rails, the rolling form of the sub-rollers in the guide rail surfaces, the shape of the R stepped portion (although this stepped portion is preferably formed outside the sub-rollers along rolling surfaces, a construction can be made such that the sub-rollers are formed in the shape of multiple wheels, and grooves therebetween are guided by ridges formed in the guide rail surfaces), and the shape and type of the trapezoidal quadrilateral link by the wedge, the main rollers, the links, and the struts. All specifications described in the embodiments are merely illustrative and should not be interpreted in a limited way.

### <First Example>

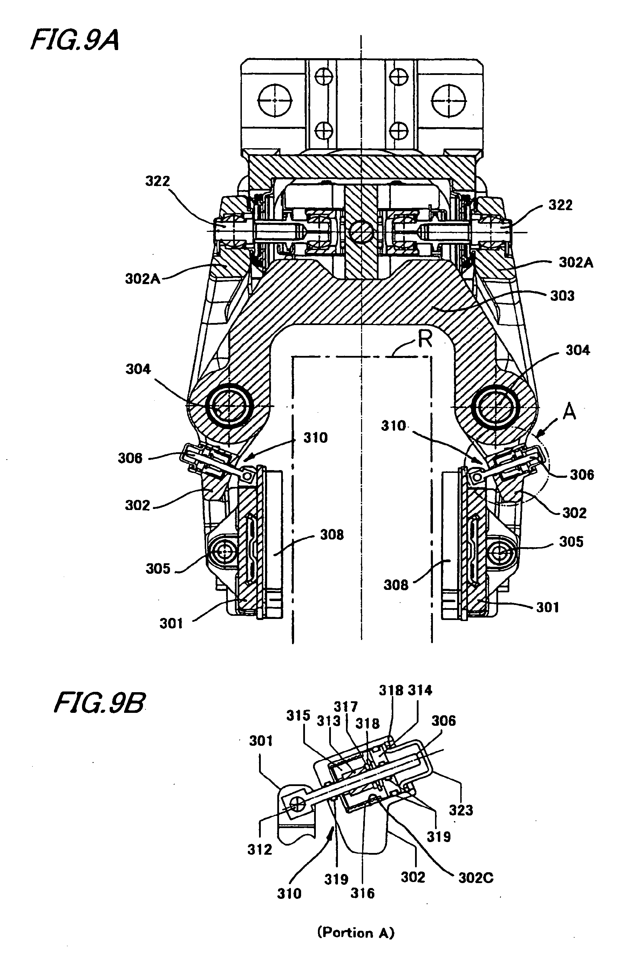

Fig. 9A and Fig. 9B are explanatory views showing a first example, which does not form part of the invention but which is described herein for a better comprehension of the same, including a pad holder with an adjuster function. Fig. 9A is a sectional view of the whole brake device in which an adjuster correcting function is disposed at a brake arm, and Fig. 9B is a sectional view of major portions of the brake device.

As shown in Fig. 9A and Fig. 9B, in a disc brake device in which upper ends 302A and 302A of a pair of brake arms 302 and 302 are expanded and pressed, and brake pads 308 and 308 mounted on pad holders 301 and 301 pivoted on lower ends of the brake arms are pressed and actuated, adjuster correcting mechanisms 310 and 310 which maintain the brake pads 308 and 308 and a disc rotor R in parallel irrespective of the posture of the brake arms 302 and 302 when the brake pads 308 and 308 mounted on the pad holders 301 and 301 are worn out and an excessive stroke is generated are provided between the brake arms 302 and 302 and the pad holders 301 and 301.

As shown in Fig. 9A, in the pair of brake arms 302 and 302 whose intermediate portions are respectively journalled by arm shafts 304 and 304 of both lower portions of a housing body 303, the upper ends 302A and 302A are expanded and pressed via a cam mechanism or an automatic gap adjusting mechanism, and the rod members 322 and 322 by a power source, such as an actuator, which is not described in detail. The pad holders 301 and 301 are pivoted at the lower ends of the arm shafts 304 and 304 so as to be swingable within rocking surfaces of the arm shafts 304 by pad shafts 305 and 305. The pad holders 301 and 301 are mounted with the brake pads 308 and 308 which face the disc rotor R.

In the first example, the adjuster correctingmechanism 310 which maintains the brake pad 308 and the disc rotor R in parallel irrespective of the posture of the brake arm 302 is disposed inside the brake arm 302 in the upper portion of the journaling portion 305 of the pad holder 301 when it is interposed between the brake arm 302 and the pad holder 301. As shown in Fig. 9B showing a portion A of Fig. 9A in an enlarged manner, the other end of a friction rod 306 having one end supported at an upper end of the pad holder 301 by a pin 312 is provided to extend toward the brake arm 302 below the arm shaft 304, and is disposed to pass through the brake arm 304. A friction spring 313 which come into sliding contact with an outer periphery of the friction rod 306 with a predetermined frictional force, and an O-ring fixing collar 314, are arrayed in series within a receiving hole 302C which receives the friction rod 306 inside the brake arm 302.

A cover 315 is fitted on an outer periphery of the friction spring 313, and the friction spring 313 and the cover 315 are fixed by a C-shaped stop ring 318 via a washer 317. The cover 315 is biased in a direction in which the cover is separated from the pad holder 301 on the outer periphery of the friction rod 306 by a return spring 316 disposed at an outer periphery of the cover. That is, the friction spring 313 is constructed to be movable against friction on the outer periphery of the friction rod 306 in a direction in which the spacing between the brake arm 302 and the pad holder 301 is increased. O-rings 319, 319, and 319 are interposed in a sliding contact surface between the outer periphery of the friction rod 306, and the brake arm 302, and a sliding contact surface between the outer periphery of the friction rod and the O-ring fixing collar 314, and between the outer periphery of the O-ring fixing collar 314, and the inner periphery of the receiving hole 302C which receives the friction rod 306 in the brake arm 302, thereby establishing sealing of lubricating oil, etc, and preventing entering of dust from the outside. Reference numeral 323 represents a dust-proofing cover which can be locked by the C-shaped stop ring 318, and be removed during maintenance.

Since the pad holder 301 is constructed so as to be swingable by the pad shaft 305, at the time of braking, the pad holder 301 and the pad 308 come into sliding contact with the disc rotor R. If the brake pad 308 is worn out, and the brake arm 302 rocks excessively, the spacing between the brake arm upper ends 302A and 302A is slightly increased by the automatic gap adjusting mechanism disposed between the brake arm upper ends 302A and 302A. However, the angle of contact of the pad 308, which is located at the lower end of the brake arm 302, with the disc rotor R changes. Therefore, depending on the behavior position of the pad holder 301 particularly when transition from a non-braking position to a braking position is made, the brake pad 308 is displaced, and contacts the disc rotor R due to vehicle vibration or the like, which will generate noises or drag.

In the first example, even in a case where the brake pad 308 is worn out, and the brake arm 302 rocks excessively, the braking posture of the brake pad 308 is held by the adjuster correcting mechanism 310. That is, the friction spring 313 moves on the outer periphery of the friction rod 306 against friction, and its corrected position is maintained by a return spring 316, the angle of inclination of the pad holder 301 with respect to the brake arm 302 is corrected, and the proper parallel position between the pad holder 301, i.e., the brake pad 308, and the disc rotor R is held. Thereby, partial wear and drag of the brake pad, resulting from vehicle vibration or the like, particularly when transition from a non-braking position to a braking position is made, is prevented. Further, since a slightly complicated adjuster correcting mechanism is disposed at the brake arm with relatively thickness, only a support pin, etc. is disposed at the pad holder. As a result, the pad holder can be made simple and light.

### <Second Example>

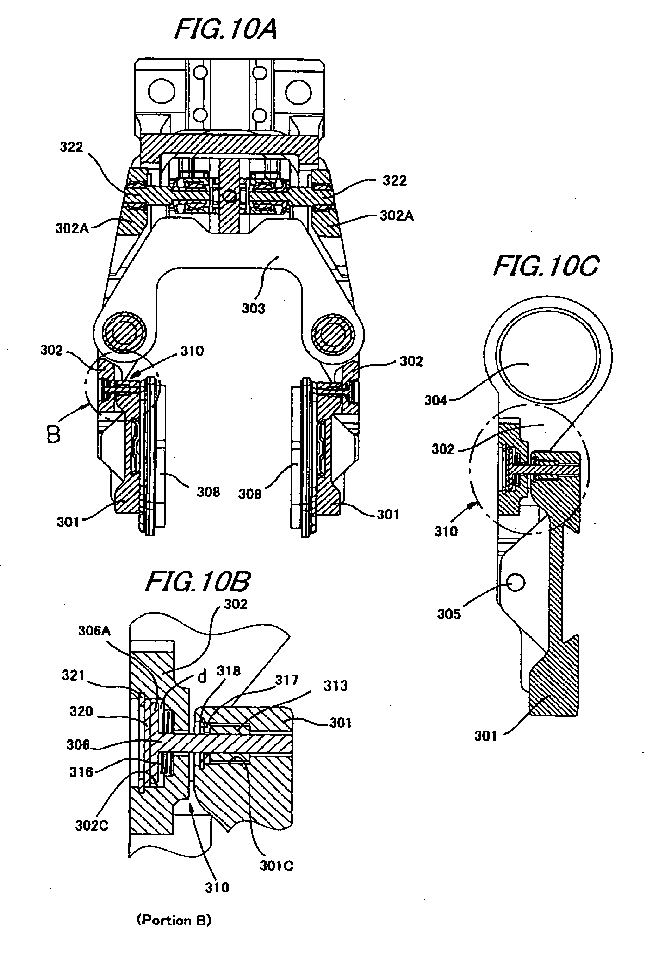

Figs. 10A to 10C show a discbrake device of a second example, which does not form part of the invention but which is described herein for a better comprehension of the same, in which an adjuster correcting mechanism is disposed at a pad holder. Fig. 10A is a sectional view of the whole brake device, and Fig. 10B is a sectional view of major portions of the brake device. In the present example, as shown in Fig. 10B which is a lower enlarged view from the arm shaft 304 of the brake arm 302 of Fig. 10A, the adjuster correcting mechanism 310 is disposed inside the pad holder 301 in the upper portion of the journaling portion 305 of the pad holder 301, unlike the second example, when it is interposed between the brake arm 302 and the pad holder 301. In addition, a return spring 316 which biases the friction rod 306 which are some parts constituting the adj uster correcting mechanism 310 is disposed at the brake arm 302.

As shown in Fig. 10C, one end of the friction rod 306 which has a flange 306A at its end is accommodated within the receiving hole 302C in the brake arm 302. A back surface of the flange 306A is regulated in a groove of an inner peripheral surface of the receiving hole 302C by a pin lid stop ring 321, via a pin lid 320. A return spring 316 is interposed in the front surface (on the side of the pad holder 301) of the flange 306A to bias the friction rod 306 in the direction in which the friction rod is separated from the pad holder 301. The other end of the friction rod 306 which has protruded from the receiving hole 302C of the brake arm 302 is inserted into the receiving hole 301C formed at the upper end of the pad holder 301. The friction spring 313 whose movement is regulated by a small-diameter stepped portion of the receiving hole 301C is brought into sliding contact with and is fitted to an the outer peripheral portion of the friction rod 306 by a predetermined frictional force. As for the portion of the friction spring 313 on the side of the brake arm 302, the movement of the friction spring 313 toward the brake arm 302 within the pad holder 301 is regulated by the C-shaped stop ring 318 via the washer 317.

Since the disc brake device is constructed in this way, even in a case where the brake pad 308 is worn out, and the brake arm 302 rocks excessively, the braking posture of the brake pad 308 is held. That is, the flange 306A of the friction rod 306 tows the friction rod 306 toward the pad holder 301 while filling a gap d between the flange 306A and a stepped portion of the receiving hole 302C against the restoring force of the return spring 316. Further, the friction spring 313 moves on the outer periphery of the friction rod 306 against friction. As a result, the angle of inclination of the pad holder 301 with respect to the brake arm 302 is corrected. The corrected position of the pad holder is maintained by the return spring 316, and the proper parallel position between the pad holder 301, i.e., the brake pad 308, and the disc rotor R is held. Thereby, partial wear and drag of the brake pad, resulting from vehicle vibration or the like, particularly when transition from a non-braking position to a braking position is made, is prevented. In addition, since some of the adjuster correcting mechanism, such as the return spring 316, are disposed at the brake arm 302, the adjuster correcting mechanism can be constructed in a well-balanced manner with respect to the pad holder 301. For this reason, portions on the side of the brake arm 302 are also simplified.

### <Third Example>

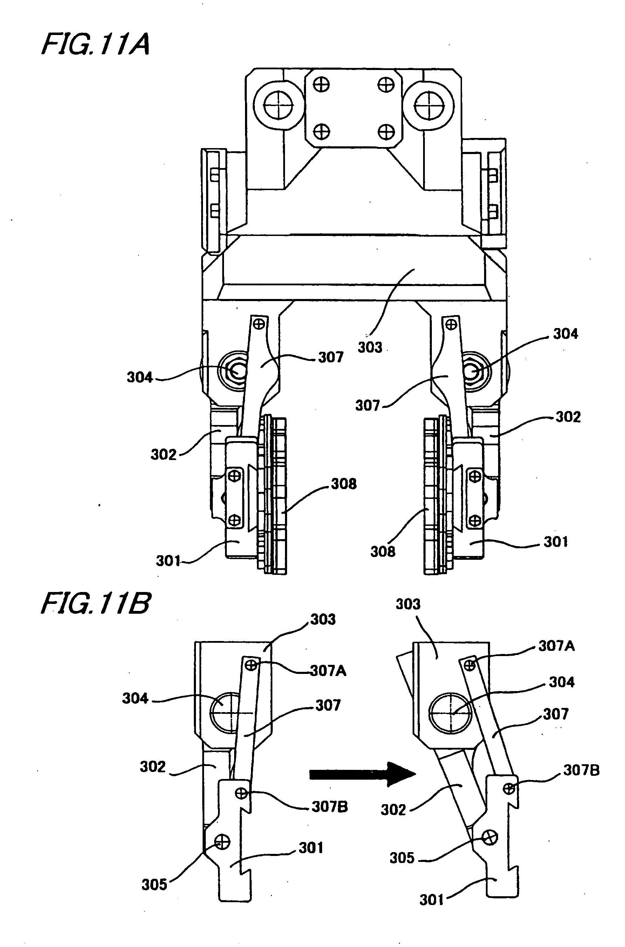

Fig. 11A and Fig. 11B show a third example, which does not form part of the invention but which is described herein for a better comprehension of the same, including a pad holder with an adjuster function. Fig. 11A is a sectional view of the whole brake device in which a link member is disposed, and Fig. 11B is a sectional view of major portions of the brake device. In the brake device of the third example, as shown in Fig. 11A and Fig. 11B, the adjuster correcting mechanism includes link members 307 and 307 which connect a pivot 307A of an upper portion of the housing body 303, and a pivot 307B of an upper portion of the pad holders 301 and 301. By such a construction, as shown in the operation diagram of Fig. 11B, the pivots 307A and 307B, the pad shaft 305, and the arm shaft 304 are connected in the shape of a parallelogram. For this reason, the pad holder 301 also properly follows the movement of the brake arm 302 which rocks excessively like a black arrow at the time of wear of the brake pad, so that the pad holder can be maintained parallel to the disc rotor. In the present example, the structure like the adjuster correcting mechanism is simplified by adoption of simpler link members. In addition, if the pivots 307A and 307B, the pad shaft 305, and the arm shaft 304 constitute a parallelogram, the link member 307 which connects the housing body 303 and the pad holder 301 may be constructed so as to connect a lower portion of the housing body 303 and a lower portion of the pad holder 301.

### <Fourth Example>

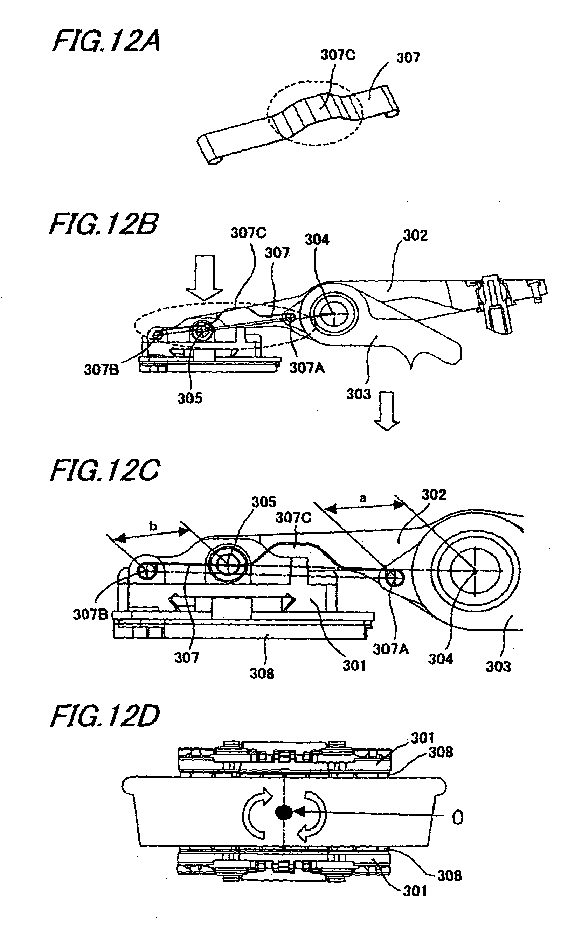

Fig. 12A to Fig. 12D show a brake device of a fourth example, which does not form part of the invention but which is described herein for a better comprehension of the same, including an adjuster function having a link member in which a spring portion is formed. Fig. 12A is a perspective view of a link member, Fig. 12B is an operation diagram of major portions, Fig. 12C is a constructional view related to each portion, and Fig. 12D shows the behavior of a wheel. As shown in Fig. 12A, a spring portion 307C which is bent and formed in the shape of a peak is formed at an intermediate portion of the link member 307 made of a leaf spring material. As shown in Fig. 12C, both upper and lower ends (in Fig. 12C, the right of the drawing is an upper portion) of the link member 307 are journalled at a lower pivot 307A in a place with the distance a from the arm shaft 304 of the brake arm 302 to the housing body 303, and at a lower pivot 307B in a place with the distance b from the pad shaft 305 of the pad holder 301 at the lower end of the brake arm 302. Here, a = b is selected, and a quadrangle obtained by connecting respective points of the arm shaft 304, the pivot 307A, the pivot 307B, and the pad shaft 305, as shown in Fig. 12B, is always maintained at a parallelogramduring the rocking operation of the brake arm 302 about the arm shaft 304 with respect the housing body 303, via the link member 307. For this reason, the pad holder 301 comes into sliding contact with and parallel to the side surface of the disc rotor. Moreover, since three-dimensional wheel vibration about a wheel center O like Fig. 12D is effectively absorbed by the existence of the spring portion 307C in the link member 307, partial contact with the pad and the disc rotor can be suppressed, and drag, partial wear, etc. can be prevented.

### <Fifth Example>

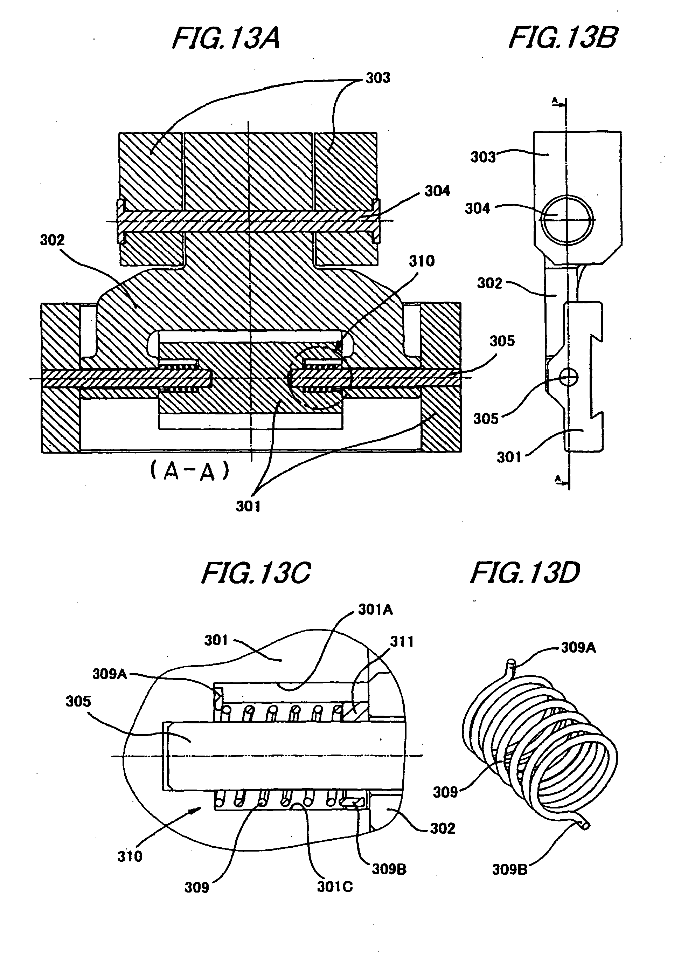

Figs. 13A to 13D are explanatory view s of sections of major portions of a brake device of a fifth example, which does not form part of the invention but which is described herein for a better comprehension of the same, in which an adjuster correcting mechanism is disposed within a journaling portion of a pad holder. In the brake device of the fifth example, the adjuster correcting mechanism 310 is disposed inside the pad holder 301 of the journaling portion of the pad holder 301. As shown to Fig. 13C, a coiled return spring 309 as shown in Fig. 13D, and a centering guide 311 disposed in series with this return spring are accommodated in a receiving hole 301C formed adjacent to a shaft hole for the pad shaft 305 in the pad holder 301, and having a slightly larger diameter than the shaft hole. One end 309A of the return spring 309 extends radially, and is locked to a shaft groove 301A axially formed in the receiving hole 301C. The other end 309B of the return spring 309 extends axially, and is locked to a hole of the centering guide 311. An inner periphery of the centering guide 311 comes into sliding contact with the pad shaft 305 with a predetermined frictional force. Further, the surface of the centering guide 311 facing the brake arm 302 may also come into sliding contact with the brake arm 302 with a predetermined frictional force.

As such, the adjuster correcting mechanism 310 is composed of the spring 309 and the centering guide 311 which are disposed within the journaling portion of the pad holder 301. Thus, if the brake pad is worn out and the angle of rotation beyond a predetermined value is generated in the pad holder 301, the centering guide 311 rotates to overcome the frictional force with the outer peripheral surface of the pad shaft 305 or with the facing surface of the brake arm 302 by the force over an elastic deformation of the spring 309. As a result, the angle of the pad holder 301 relative to the brake arm 302 is displaced and adjusted such that the brake pad 308 and the disc rotor R may be maintained in parallel. As such, in this example, the adjuster correcting mechanism can be disposed in the journaling portion. Thus, as well as the friction rod or the like is not exposed to the outside, and a structure which is hardly influenced by a scattering stone or heavy snow, is good-looking, and is simpler is obtained. In addition, it is not necessary to dispose any parts of the adjuster correcting mechanism on the side of the brake arm. Thus, the structure on the side the brake arm becomes simple.

Moreover, according to the angle of relative rotation of the brake arm 302 and the pad holder 301, the centering guide 311 rotates by the force over the elastic deformation of the spring 309, and thereby adjuster correction is made. As such, since adjustment correction is made by the operation in a rotational direction in the journaling portion which is a central portion of the operation of the pad holder 301, the operation at the time of adjuster correction becomes smooth. In addition, the adjuster correcting mechanism 310 may be disposed inside the brake arm 302 of the journaling portion of the pad holder 301. In that case, since the friction rod or the like is not exposed to the outside, a structure which is hardly influenced by a scattering stone or heavy snow, is good-looking, and is simpler is obtained. In addition, simplification on the side of the pad holder is achieved by disposing a slightly complicated adjuster correcting mechanism on the side of the brake arm with a comparative margin.

The embodiments of the invention and at least one example, which does not form part of the invention but which is described herein for a better comprehension of the same, have been described hitherto. However, proper selections can be made without departing from the scope of the invention about the shape and type of the brake arms, and the journaling form of the brake arms to the housing body, the shape (although being preferably a circular cross-sectional shape, it can be a non-circular shape, for example, a flange shape) and type of the friction rod constituting the adjuster correcting mechanism, the shape and type (although being preferably a coiled shape, it can be a cylindrical shape having slits axially, a cylindrical shape having elasticity, etc.) of the friction spring, the frictional fitting form (other than the smooth surface of the spring rod which generates a predetermined frictional force, fine moderate irregularities may be formed in an outer peripheral surface of the friction rod, and moderate irregularities corresponding thereto may be formed in an inner peripheral surface of the friction spring) between the friction rod and the friction spring, the supporting or fitting form (simple pin journaling, biasing supporting of the rod having a flange by a return spring, etc.) of the friction rod to the brake arm or pad holder, the supporting or fitting form (such as using a spring cover or the like along with the return spring or receiving only the friction spring in a receiving matrix) of the friction spring to the pad holder or brake arm, the shape and type (although one link member is basically disposed, link members may be disposed in a plurality of axial places of the pad shaft. Other than a rigid link member, link members in the form of a leaf spring including the formation form of a spring portion may be adopted) of the link member constituting the adjuster correcting mechanism, and the supporting form of the link member to the brake arm and the pad holder, the locking form (other than locking a spring having an axial projection to an axial groove for attachment, the axial groove may not be formed utilizing the elasticity of the spring, but an engaging hole only for the axial projection may be formed and the spring may be locked thereto) of a spring constituting the adjuster correcting mechanism to the receiving hole, the receiving form and receiving position (may be received on either the brake arm side or the pad holder side) between the spring and the centering guide in the pad holder journaling portion including the frictional fitting form (other than utilizing a predetermined frictional force with respect to the outer peripheral surface of the pad shaft or the side surface of the brake arm, fine moderate irregularities may be formed in the outer peripheral surface of the pad shaft or the side surface of the brake arm, and moderate irregularities corresponding thereto may be formed in the inner peripheral surface or side surface of the friction spring) of the centering guide to the pad shaft, the shape and type of the spring, the shape and type of the centering guide, and the locking form therebetween, the type (both a positive pressure type and a negative pressure type can be adopted; for example, a diaphragm type, a piston type, or the like) and number (a packing chamber can be additionally provided) of the air chamber of the brake chamber constituting an actuator of a power unit, the shape and type of the cam mechanism constituting the boosting mechanism, the shape and type of the automatic gap adjusting mechanism, the shape and type of the rod member and the attachment form of the rod member to the upper end of the brake arm, and the rocking and journaling form (one having degree of freedoms in all directions, etc.) of the brake arm to the housing body. All specifications described in the embodiments and examples are merely illustrative and should not be interpreted in a limited way.

## Claims

1. A disc brake device comprising:
a wedge rod (20) axially moved by an actuator (4) and orthogonally arranged to a wheel axle;
a wedge (5) mounted on the wedge rod (20) and having an inclined surface;
a main roller (6) capable of rolling on an inclined surface; and
wherein a base end of a brake arm (3) is boosted, pressed, and expanded in accordance with the movement of the main roller (6), and a brake pad disposed at a rocking end of the brake arm (3) is pressed and actuated, **characterized by**:
a link (12) rocking in accordance with a movement of the main roller (6),
wherein an intermediate portion (12C) of the link (12) and the base end of the brake arm (3) are coupled via a gap adjusting mechanism (14),
wherein a pair of sub-rollers (7, 7) capable of rolling on guide rails (11, 11) are disposed coaxially with the main roller (6) on both sides of the main roller (6).

2. The disc brake device according to Claim 1, wherein the main roller (6) comprises a pair of main rollers (6, 6), and the link (12) comprises a pair of links (12, 12), and wherein base ends (128, 12B) of the links (12, 12) are journalled to both ends of a strut (15), and a trapezoidal quadrilateral link is constituted by the wedge (5), the main rollers (6, 6), the links (12, 12), and the strut (15).

3. The disc brake device according to Claim 1 or 2, wherein both ends of the gap adjusting mechanism (14) is respectively coupled with a base end of the link (12) and the brake arm (3) via spherical bearings (13A, 13B).

4. The disc brake device according to any one of Claims 1 to 3, wherein stepped portions (11 D) which regulate axial movements of the sub-rollers (7) are respectively formed on the guide rail (11).

5. The disc brake device according to any one of Claims 1 to 4, wherein the inclined surface of the wedge (5) includes two surfaces (5A, 5B) having two different surface angles.

6. The disc brake device according to any one of Claims 1 to 5, wherein the gap adjusting mechanism (14) comprises an automatic gap adjusting mechanisms that adjusts a spacing between the link (12) and the base end of the brake arm (3) to increase by an excessive stroke of the main roller (6).

7. The disc brake device according to Claim 2, wherein double torsion springs (17, 17) are respectively disposed in journaling portions between the base ends (128, 12B) of the pair of links (12, 12), and both ends of the strut (15).

## Patentansprüche

1. Scheibenbremsenvorrichtung, die umfasst:
eine Keilstange (20), die von einem Betätigungselement (4) axial bewegt wird und senkrecht zu einer Radachse angeordnet ist;
einen Keil (5), der an der Keilstange (20) angebracht ist und eine geneigte Fläche aufweist;
eine Hauptrolle (6), die auf einer geneigten Fläche rollen kann; und
wobei ein Basisende eines Bremsschenkels (3) entsprechend der Bewegung der Hauptrolle (6) unter Druck gesetzt, gepresst und ausgefahren wird und ein Bremsbelag, der an einem Schwingende des Bremsschenkels (3) angeordnet ist, gepresst und betätigt wird, **gekennzeichnet durch**:
ein Verbindungsglied (12), das entsprechend einer Bewegung der Hauptrolle (6) schwingt,
wobei ein Zwischenabschnitt (12C) des Verbindungsgliedes (12) und das Basisende des Bremsschenkels (3) über einen Spaltreguliermechanismus (14) verbunden sind,
wobei ein Paar Nebenrollen (7, 7), die an Führungsschienen (11, 11) rollen können, koaxial zu der Hauptrolle (6) an beiden Seiten der Hauptrolle (6) angeordnet sind.

2. Scheibenbremsenvorrichtung nach Anspruch 1, wobei die Hauptrolle (6) ein Paar Hauptrollen (6, 6) umfasst und das Verbindungsglied (12) ein Paar Verbindungsglieder (12, 12) umfasst, und
wobei Basisenden (12B, 12B) der Verbindungsglieder (12, 12) an beiden Enden einer Strebe (15) gelagert sind und ein trapezförmiges Gelenkviereck durch den Keil (5), die Hauptrollen (6, 6), die Verbindungsglieder (12, 12) und die Strebe (15) gebildet wird.

3. Scheibenbremsenvorrichtung nach Anspruch 1 oder 2, wobei beide Enden des Spaltreguliermechanismus (14) jeweils mit einem Basisende des Verbindungsgliedes (12) und dem Bremsschenkel (3) über sphärische Lager (13A, 13B) gekoppelt sind.

4. Scheibenbremsenvorrichtung nach einem der Ansprüche 1 bis 3, wobei abgestufte Abschnitte (11 D), die axiale Bewegungen der Nebenwalzen (7) regulieren, jeweils an der Führungsschiene (11) ausgebildet sind.

5. Scheibenbremsenvorrichtung nach einem der Ansprüche 1 bis 4, wobei die geneigte Fläche des Keils (5) zwei Flächen (5A, 5B) mit zwei unterschiedlichen Flächenwinkeln enthält.

6. Scheibenbremsenvorrichtung nach einem der Ansprüche 1 bis 5, wobei der Spaltreguliermechanismus (14) einen automatischen Spaltreguliermechanismus umfasst, der einen Abstand zwischen dem Verbindungsglied (12) und dem Basisende des Bremsschenkels (3) so reguliert, dass er bei einem zu starken Hub der Hauptrolle (6) vergrößert wird.

7. Scheibenbremsenvorrichtung nach Anspruch 2, wobei Doppel-Torsionsfedern (17, 17) jeweils an Lagerungspositionen zwischen den Basisenden (12B, 12B) der paarigen Verbindungsglieder (12, 12) und beiden Enden der Strebe (15) angeordnet sind.

## Revendications

1. Dispositif de frein à disque comprenant :
une tige de cale (20) déplacée de manière axiale par un actionneur (4) et agencée de manière orthogonale par rapport à un essieu de roue ;
une cale (5) montée sur la tige de cale (20) et ayant une surface inclinée ;
un rouleau principal (6) capable de rouler sur une surface inclinée ; et
dans lequel une extrémité de base d'un bras de frein (3) est augmentée, comprimée et expansée selon le mouvement du rouleau principal (6), et une plaquette de frein à disque disposée au niveau d'une extrémité basculante du bras de frein (3) est comprimée et actionnée, **caractérisé par** :
une liaison (12) basculant selon un mouvement du rouleau principal (6),
dans lequel une partie intermédiaire (12C) de la liaison (12) et l'extrémité de base du bras de frein (3) sont couplées via un mécanisme d'ajustement d'espace (14),
dans lequel une paire de sous-rouleaux (7, 7) pouvant rouler sur des rails de guidage (11, 11) sont disposés de manière coaxiale par rapport au rouleau principal (6) des deux côtés du rouleau principal (6).

2. Dispositif de frein à disque selon la revendication 1, dans lequel le rouleau principal (6) comprend une paire de rouleaux principaux (6, 6) et la liaison (12) comprend une paire de liaisons (12, 12), et
dans lequel les extrémités de base (12B, 12B) des liaisons (12, 12) sont tourillonnées au niveau des deux extrémités d'une entretoise (15), et une liaison quadrilatérale trapézoïdale est constituée par la cale (5), les rouleaux principaux (6, 6), les liaisons (12, 12) et l'entretoise (15).

3. Dispositif de frein à disque selon la revendication 1 ou 2, dans lequel les deux extrémités du mécanisme d'ajustement d'espace (14) sont respectivement couplées avec une extrémité de base de la liaison (12) et le bras de frein (3) via des paliers sphériques (13A, 13B).

4. Dispositif de frein à disque selon l'une quelconque des revendications 1 à 3, dans lequel des parties étagées (11D) qui régulent les mouvements axiaux des sous-rouleaux (7) sont respectivement formées sur le rail de guidage (11).

5. Dispositif de frein à disque selon l'une quelconque des revendications 1 à 4, dans lequel la surface inclinée de la cale (5) comprend deux surfaces (5A, 5B) ayant deux angles de surface différents.

6. Dispositif de frein à disque selon l'une quelconque des revendications 1 à 5, dans lequel le mécanisme d'ajustement d'espace (14) comprend un mécanisme d'ajustement d'espace automatique qui ajuste un espacement entre la liaison (12) et l'extrémité de base du bras de frein (3) pour augmenter selon une course excessive du rouleau principal (6).

7. Dispositif de frein à disque selon la revendication 2, dans lequel des ressorts à double torsion (17, 17) sont respectivement disposés dans des parties de tourillon entre les extrémités de base (12B, 12B) de la paire de liaisons (12, 12) et des deux extrémités de l'entretoise (15).
